# EUROPEAN PATENT APPLICATION

(11) **EP 1 944 969 A2**
(43) Date of publication of application: **16.07.2008**
(21) Application number: 07117786.9
(22) Date of filing: 02.10.2007
(51) Int. Cl.: H04N 5/775, H04N 5/44, H04B 1/20

(54) **Display device and method of controlling external devices**

(30) Priority: 12.01.2007 KR 20070003759
(71) Applicant: Samsung Electronics Co., Ltd., Suwon-si, Gyeonggi-do 442-742 (KR)
(72) Inventor: Park, Si-hong, Gyeonggi-do (KR)
(74) Representative: Robinson, Ian Michael

(57) **Abstract**

A display device (100) includes: a display unit (10); a video processing unit (20) which performs video processing to display a video signal on the display unit (10); a communication unit (30) which communicates with an external device (300) which provides the video signal according to a High Definition Multimedia Interface-Consumer Electronics Control (HDMI-CEC) standard; and a controller (40) which controls the communication unit (30) to transmit a command for the device to perform a series of functions to the external device (300) to be controlled on booting.

## Description

### BACKGROUND OF THE INVENTION

### 1. Field of the Invention

Apparatuses and methods consistent with the present invention relates to a display device and a method of controlling external devices, and more particularly, to a display device which transmits commands to respective external devices and a method of controlling external devices.

### 2. Description of the Related Art

Display devices are used to display video images thereon based on video signals. As a digital broadcasting service starts lately, digital televisions (TVs) display high-quality video images thereon, and are linked with various external devices to perform various functions as well. A High Definition Multimedia Interface (HDMI) has been developed as a standard of transmitting video images input to the digital TVs. The HDMI standard includes digital audio functions and Consumer Electronics Control (CEC) functions in addition to a conventional Digital Video Interactive (DVI) standard.

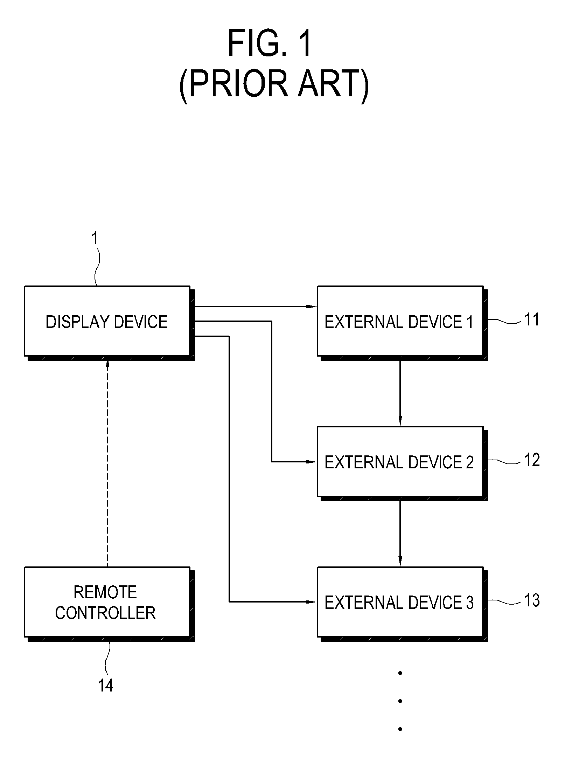

As illustrated in FIG. 1, a related art display device 1 which can perform a Consumer Electronics Control (CEC) function is linked with at least one external device, e.g.., external devices 11-13. The display device 1 receives a command for controlling the at least one external device which is input from a user, e.g., via a remote controller 14, and then transmits the received command to a corresponding external device. Accordingly, manipulation of the at least one external device which is connected to a digital TV can be easily controlled using the remote controller 14 provided for the display device 1.

Further, a user should manipulate a display device several times, to control external devices connected to the display device, to thus cause an uncomfortable problem. In particular, even if an identical function of an external device is used, an identical manipulation should be repeated whenever the external device is controlled for operation.

### SUMMARY OF THE INVENTION

Exemplary embodiments of the present invention address the above disadvantages and other disadvantages not described above. Also, the present invention is not required to overcome the disadvantages described above, and an exemplary embodiment of the present invention may not overcome any of the problems described above.

According to the present invention there is provided an apparatus and method as set forth in the appended claims. Other features of the invention will be apparent from the dependent claims, and the description which follows.

The present invention provides a display device which controls an external device connected to the display device by transmitting a series of commands to perform a function required by a user to the external device by a single input, and a control method thereof.

According to an aspect of the present invention, there is provided a display device comprising: a display unit; a video processing unit which performs video processing to display a video signal on the display unit; a communication unit which communicates with an external device which provide the video signal according to a High Definition Multimedia Interface-Consumer Electronics Control (HDMI-CEC) standard; and a controller which controls the communication unit to transmit a command for at least one external device to perform a series of functions to the external device to be controlled on booting.

If the video signal is received from the external device to be controlled, the controller may control the video processing unit to change to a video mode that a video image corresponding to the received video signal is displayed on the display unit.

The display device may further comprise a storage unit, wherein the controller stores the command corresponding to the series of the functions in the storage unit.

The display device may further comprise a user input unit, wherein the controller receives the series of the functions through the user input unit.

The display device may further comprise a user interface (UI) generating unit which generates a UI to input the series of the functions, wherein the controller controls the UI generating unit to be input the series of the functions through the generated UI.

The controller may receive a UI to input the series of functions, from the external device through the communication unit.

The controller may control the display unit to display a message thereon if the controller judges that the external device may malfunction due to the series of the input functions.

The external device may comprise at least one of a set-top box, a digital versatile disk (DVD) player, and a recorder.

The set-top box may be integrally combined with the display device.

According to another aspect of the present invention, there is provided a method of controlling an external device in a display device connected to the external device which provides a video signal, the method comprising: receiving a series of functions which at least one external device performs; and transmitting a command corresponding to the series of the input functions to the external device to be controlled on booting according to an HDMI-CEC standard.

If the video signal is received from the external device to be controlled, the transmitting the command may comprise changing to a video mode that a video image corresponding to the received video signals is displayed.

The receiving the series of functions may comprise storing the command corresponding to the series of the input functions.

The receiving the series of functions may comprise receiving the series of the functions through a UI.

The receiving the series of functions may comprise receiving the UI to be input the series of functions, from the external devices.

The receiving the series of functions may comprise displaying a message in the case of judging that the external device may malfunction due to the series of the input functions.

### BRIEF DESCRIPTION OF THE DRAWINGS

The above and/or other aspects of the present invention will become apparent and more readily appreciated from the following description of the exemplary embodiments, taken in conjunction with the accompanying drawings in which:
FIG. 1 is a block diagram showing a configuration of a related art display device according to an HDMI-CEC standard;
FIG. 2 is a block diagram showing a configuration of a display device according to a first exemplary embodiment of the present invention;
FIG. 3 is a block diagram showing a configuration of a display device according to a second exemplary embodiment of the present invention;
FIGS. 4A and 4B are diagrams showing an example of a user interface according to the present invention, respectively; and
FIG. 5 is a flowchart showing a method of controlling external devices in a display device according to an exemplary embodiment of the present invention.

### DETAILED DESCRIPTION OF EXEMPLARY EMBODIMENTS OF THE INVENTION

Reference will now be made in detail to exemplary embodiments of the present invention, examples of which are illustrated in the accompanying drawings, wherein like reference numerals refer to like elements throughout. The exemplary embodiments are described below in order to explain the present invention by referring to the figures.

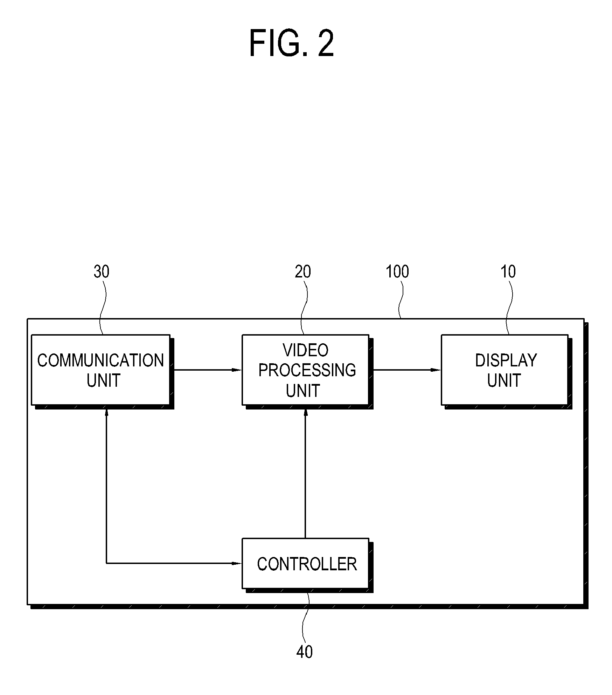

FIG. 2 is a block diagram showing a configuration of a display device 100 according to a first exemplary embodiment of the present invention. As illustrated in FIG. 2, the display device 100 according to the first exemplary embodiment of the present invention includes a display unit 10, a video processing unit 20, a communication unit 30 and a controller 40. The display device 100 according to the first exemplary embodiment of the present invention may be implemented into a digital TV connected with an external device 300 according to the HDMI-CEC standard.

The display unit 10 displays video images thereon, based on video signals which are processed by the video processing unit 20. The display unit 10 may be implemented in the form of a cathode ray tube (CRT), a liquid crystal display (LCD), a plasma display panel (PDP), a digital light processing (DLP) device, a surface-conduction electron-emitter display (SED), a field emission display (FED), and other known display devices in the art.

The video processing unit 20 performs video processing for video signals. Here, the video signals which are processed by the video processing unit 20 may be received through a receiver (not shown) including an antenna and a tuner, and/or may be received from an external device 300 connected to the display device 100.

The video processing unit 20 according to the first exemplary embodiment of the present invention can perform decoding for extracting video information from input video signals, scaling for controlling resolution of the decoded video images according to characteristics of the display unit 30 and user's setting, picture enhancement for improving quality of video images, and other known video processing in the art.

The video processing unit 20 receives a UI image which is generated by a UI generating unit 70 under the control of the controller 40, and generates an image including a UI image to then be displayed on the display unit 10.

The communication unit 30 communicates with an external device 300 which provides video signals. Preferably, but not necessarily, the communication unit 30 according to the first exemplary embodiment of the present invention transmits and receives one of and a command for at least one external device 300 to perform a series of functions according to the HDMI-CEC standards. However, the communication unit 30 may be implemented by any configuration of connecting a number of electronic devices as well as by a radio communication device such as a wireless local area network module.

Here, according to the HDMI-CEC standard, a polling message is transmitted to each external device 300 by using a logical address depending upon a kind of the external device 300, and a physical address is received from the external device 300 which responds to the transmitted polling message. In addition, video signals can be transmitted to other external devices 300 using the received physical address. To perform this action, the physical address of each external device 300 may be stored, and a matching work of the physical address with the logical address may be needed.

The controller 40 controls the communication unit 30 to transmit a command to the external devices 300 so that at least one of the external devices 300 performs a series of functions. The controller 40 according to the present invention may be embodied using a microprocessor and software programs.

Here, the external device 300 may include at least one of a set-top box, a DVD player, a recorder, a home theater, etc., and perform communications with the display device 100 according to the HDMI-CEC standard. In the case that the external device 300 is embodied as a set-top box, the set-top box may be integrally combined with the display device 100 as a built-in type.

The command transmitted to the external device 300 is a plurality of commands generated in a macro form to enable at least one of the external devices 300 to perform a series of functions. In addition, the command may include a CEC message to enable the external device 300 to perform various functions such as power on/ off and video recording.

The controller 40 transmits a command of a macro form to a microprocessor of a corresponding external device 300 through the communication unit 30 in the case that there is an input for controlling the external device 300 from a user. The controller 40 may transmit a command to the external device 300 at the time of booting the display device 100 in order to minimize a delay time necessary for actions of the external device 300. Accordingly, the external device 300 which receives the command can perform a series of functions.

The controller 40 can control the video processing unit 20 to process the video signals which are provided by the external device 300 which has received the command to then be displayed on the display unit 10. The controller 40 preferably, but not necessarily, controls the video processing unit 20 to change to a video mode so that the video image corresponding to the video signals which are provided by the corresponding external device 300 can be displayed on the display unit 10.

Accordingly, a user can easily control the external devices 300 connected to the display device 100 by a single input.

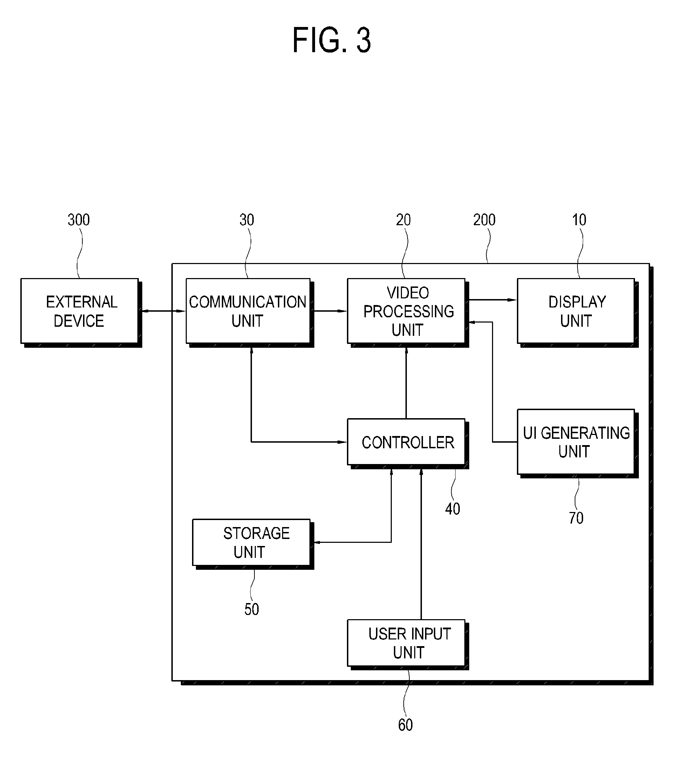

Hereinbelow, a display device 200 according to a second exemplary embodiment of the present invention will be described with reference to FIG. 3. The display device 200 includes a display unit 10, a video processing unit 20, a communication unit 30, a controller 40, a storage unit 50, a user input unit 60 and a UI generating unit 70. Here, the detailed description of the elements of the display device 200 of FIG. 3 according to the second exemplary embodiment of the present invention which are the same as those of the display device 100 of FIG. 2 according to the first exemplary embodiment of the present invention will be omitted.

The storage unit 50 stores a command to enable the external device 300 to perform a series of functions. The storage unit 50 according to the second exemplary embodiment of the present invention can be implemented into a non-volatile memory such as a flash memory, or a hard-disk. In addition, the storage unit 50 can be embodied into a memory which is provided in a cellular phone, etc., by a Bluetooth method.

Although FIG. 3 illustrates a case that the storage unit 50 is included in the display device 100, the storage unit 50 storing a command may be included in the external device 300.

The user input unit 60 enables a user to input a series of functions which the external device 300 performs. The user input unit 60 according to the second exemplary embodiment of the present invention may be embodied into a radio remote controller, and may include menu keys and a key signal generator which produces key signals in correspondence to manipulation of keys. Of course, the user input unit 60 according to the second exemplary embodiment of the present invention may be provided in one side of a main body of the display device 200.

The UI generating unit 70 generates a UI to allow the external device 300 to receive and perform a series of functions. Although FIG. 3 illustrates a case that the UI generating unit 70 is included in the display device 200, the UI generating unit 70 may be included in the external device 300. Here, the controller 40 receives the UI which is generated by the external device 300 through the communication unit 30.

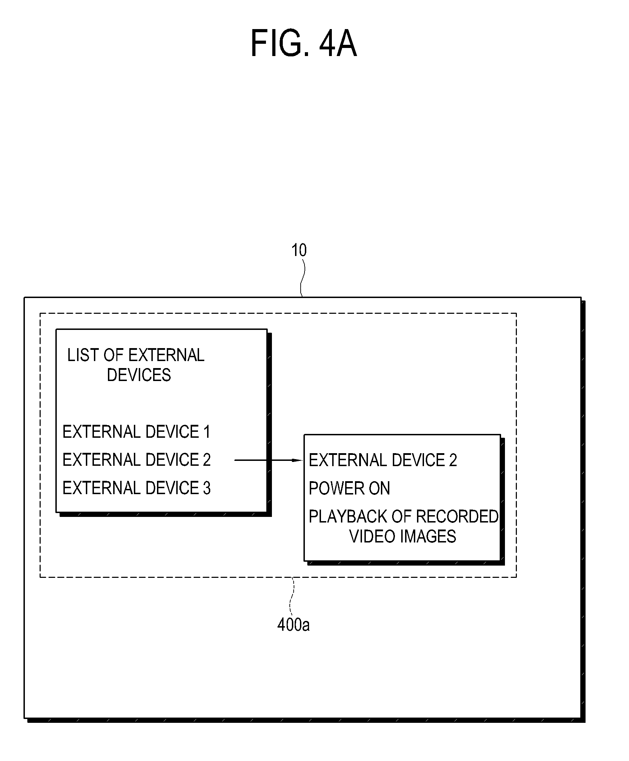

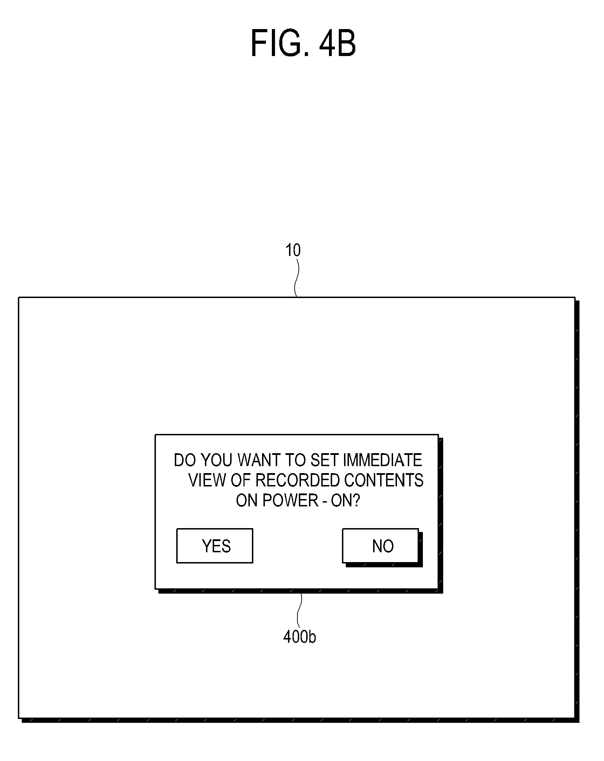

FIGS. 4A and 4B are diagrams for explaining a UI 400 according to the present invention. As illustrated in FIGS. 4A and 4B, the UI 400 according to the present invention may include a user definition interface 400a and a message interface 400b.

As illustrated in FIG. 4A, the user definition interface 400a includes a list of the respective external devices 300 and a list of functions which the respective external devices 300 can perform. A user can select the external device 300 to be controlled through the list of the external device 300 and then can input a series of functions through the list of functions which the selected external device 300 can perform.

Here, the controller 40 stores a command which corresponds to a series of functions selected by the user in the storage unit 50, according to a macro form. In the case that it judges that the external device 300 may malfunction by a series of functions that the user has selected, the controller 40 can control the display unit 10 to display a predetermined message thereon to inform the user that the external device 300 may malfunction.

As illustrated in FIG. 4B, the message interface 400b is displayed in the case that a particular function is performed by the external device 300 and a power of the display device 100 or 200 is turned off so that the user can select whether to enable the display device 100 to perform a series of functions when the power is turned on. If the user has selected a series of functions through the message interface 400b, the controller 40 controls the communication unit 30 to transmit a command which enables the external device 300 to perform the series of functions at the time of booting the display device 100 or 200 to the corresponding external device 300. Accordingly, the controller 40 can minimize a delay time necessary for operations of the external device 300.

Although it has been described in the exemplary embodiments of the present invention that the message interface 400b is displayed on the display unit 10 before the display device 100 or 200 is turned off, the present invention is not limited thereto, but may be designed to allow the controller 40 to control the display unit 10 to display the message interface 400b thereon if necessary such as a user's request.

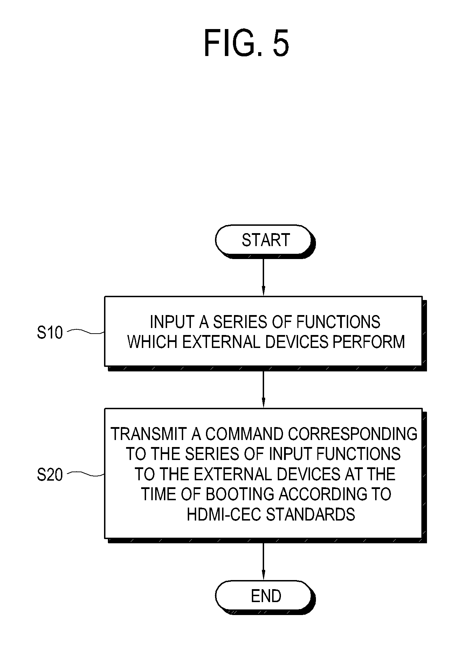

Hereinbelow, a method of controlling external device from a display device 100 or 200 according to an exemplary embodiment of the present invention will be described with reference to FIG. 5.

First, the controller 40 receives a series of functions which at least one of the external devices 300 connected to the display device 100 or 200 performs (S10). Here, the controller 40 may further include the operation of storing a command corresponding to the series of the input functions in the storage unit 50, in operation S10. The controller 40 may receive a series of functions through a UI generated by a UI generating unit 70 in operation S10. Also, a user interface (UI) to enable a user to input a series of functions may be received from the external device 300.

In addition, the controller 40 transmits a command corresponding to a series of functions input in operation S10 to the external device 300 (S20). Here, the controller 40 may perform the operation of processing and displaying video signals which are provided by the external device 300 which has received the command in operation S20. The controller 40 can transmit a command to the external device 300 at the time of booting the display device 100 or 200 in operation S20. Accordingly, a delay time necessary for the operations of external devices 300 can be minimized.

As described above, according to the exemplary embodiments of the invention, a series of commands to perform a function required by a user is transmitted to external devices so that the external devices connected with the display device can be easily controlled by a single input. Also, a command is transmitted to the external devices at the time of booting the display device, to thus minimize a delay time necessary for operations of the external devices.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display device (100) comprising:
a display unit (10);
a video processing unit (20) which performs video processing to display a video signal on the display unit (10);
a communication unit (30) which communicates with an external device (300) which provides the video signal according to a High Definition Multimedia Interface-Consumer Electronics Control (HDMI-CEC) standard; and
a controller (40) which controls the communication unit (30) to transmit a command for the external device (300) to perform a series of functions to the external device (300) to be controlled on booting.

2. The display device (100) according to claim 1, wherein, if the video signal is received from the external device (300) to be controlled, the controller (40) controls the video processing unit (20) to change to a video mode in which a video image corresponding to the received video signal is displayed on the display unit (10).

3. The display device (100) according to claim 1 or 2, further comprising a storage unit (50), wherein the controller (40) stores the command corresponding to the series of the functions in the storage unit (50).

4. The display device (100) according to any preceding claim, further comprising a user input unit (60), wherein the controller (40) receives the series of the functions through the user input unit (60).

5. The display device (100) according to claim 4, further comprising a user interface (UI) generating unit (70) which generates a UI to input the series of the functions, wherein the controller (40) controls the UI generating unit (70) to be input the series of the functions through the generated UI.

6. The display device (100) according to claim 4, wherein the controller (40) receives a user interface to input the series of functions, from the external device (300) through the communication unit (30).

7. The display device (100) according to any of claims 4 to 6, wherein the controller (40) controls the display unit (10) to display a message if the controller (40) judges that the external device (300) may malfunction due to the series of the input functions.

8. The display device (100) according to any preceding claim, wherein the external device (300) comprises any one or more of a set-top box, a digital versatile disk player, and a recorder.

9. The display device (100) according to any preceding claim, wherein the external device (300) comprises a set-top box which is integrally combined with the display device (100).

10. A method of controlling an external device (300) in a display device (100) connected to the external device (300) which provides a video signal, the method comprising:
receiving a series of functions which the external device (300) performs; and
transmitting a command corresponding to the series of the input functions to the external device (300) to be controlled on booting according to a High Definition Multimedia Interface-Consumer Electronics Control (HDMI-CEC) standard.

11. The method of controlling external devices (300) of claim 10, wherein, if the video signal is received from the external device (300) to be controlled, the transmitting the command comprises changing to a video mode in which a video image corresponding to the received video signals is displayed.

12. The method of controlling external devices (300) of claim 10, wherein the receiving the series of functions comprises storing the command corresponding to the series of the input functions.

13. The method of controlling external devices (300) of claim 10, wherein the receiving the series of functions comprises receiving the series of the functions through a user interface (UI).

14. The method of controlling external devices (300) of claim 13, wherein the receiving the series of functions comprises receiving the UI to be input the series of functions, from the external devices (300).

15. The method of controlling external devices (300) of claims 13 or 14, wherein the receiving the series of functions comprises displaying a message in the case of judging that the external device (300) may malfunction due to the series of the input functions.
